Europäisches Patentamt

European Patent Office

Office européen des brevets

(11) Numéro de publication: **0 402 213 B1**

(12) **FASCICULE DE BREVET EUROPEEN**

(45) Date de publication de fascicule du brevet: **21.09.94**  (51) Int. Cl.5: **C08F 8/28**, B32B 17/10

(21) Numéro de dépôt: **90401480.0**

(22) Date de dépôt: **01.06.90**

(54) **Procédé de fabrication de polyvinylbutyral et produits obtenus.**

(30) Priorité: **08.06.89 FR 8907577**

(43) Date de publication de la demande:
**12.12.90 Bulletin 90/50**

(45) Mention de la délivrance du brevet:
**21.09.94 Bulletin 94/38**

(84) Etats contractants désignés:
**BE CH DE ES FR GB IT LI LU NL SE**

(56) Documents cités:
**EP-A- 0 000 699**
**EP-A- 0 130 872**
**EP-A- 0 174 479**
**EP-A- 0 174 480**

(73) Titulaire: **E.I. DU PONT DE NEMOURS AND COMPANY**
**1007 Market Street**
**Wilmington Delaware 19898 (US)**

(72) Inventeur: **Klock, Denis**
**2 Bis Place Du Chateau d'Eau**
**F-93120 La Courneuve (FR)**
Inventeur: **Dages, Daniel**
**30 Ter Rue des Perrons**
**F-78130 Les Mureaux (FR)**

(74) Mandataire: **Woodcraft, David Charles et al**
**High Holborn House**
**52/54 High Holborn**
**London WC1V 6SE (GB)**

## Description

L'invention concerne la fabrication d'un polyvinylbutyral amélioré, utilisé notamment en tant qu'intercalaire pour des vitrages feuilletés.

On connait différentes méthodes de fabrication du polyvinylbutyral. Par exemple dans la publication FR-A-2 401 941, on décrit un procédé de fabrication de polyvinylbutyral par réaction d'alcool polyvinylique en solution aqueuse et d'aldéhyde butyrique comprenant la suite d'opérations suivantes, on prend une solution aqueuse comprenant entre 8 et 15 % en poids d'alcool polyvinylique, on y incorpore un catalyseur acide et un émulsifiant, on introduit dans le mélange obtenu maintenu entre 5 et 12°C et sous agitation de l'aldéhyde butyrique en quantité suffisante pour réagir avec 75 % à 88 % de l'alcool polyvinylique du mélange, l'introduction de l'aldéhyde butyrique s'effectuant progressivement pendant une durée telle que le polyvinylbutyral précipite entre 10 et 90 minutes après le début de cette introduction, on maintient le mélange sous agitation pendant une durée supérieure à 30 minutes à une température de 8 à 15°C, on élève ensuite la température du mélange jusqu'à une valeur maintenue entre 60 et 80°C en un laps de temps compris entre une heure et demie et 4 heures, lorsque ladite valeur de température est atteinte, on incorpore une base dans le mélange jusqu'à obtention d'un pH compris entre 9 et 11, on maintient ensuite la température à ladite valeur pendant une durée supérieure à un quart d'heure, on sépare le polyvinylbutyral précipité du mélange, et on le lave avec de l'eau.

Le polyvinylbutyral (PVB) obtenu par ce procédé présente des propriétés qui le rendent apte après plastification à être utilisé sous forme de feuilles intercalaires dans les vitrages feuilletés. Ces propriétés de la feuille intercalaire ou du vitrage l'utilisant sont notamment le fluage en compression de la feuille de PVB, la résistance aux chocs du vitrage feuilleté comprenant une telle feuille de PVB (test de la chute de bille), la force d'adhérence du PVB aux feuilles de verre (Pummel test), la transparence du vitrage feuilleté (détermination du trouble ou turbidité du vitrage).

Dans le procédé décrit, on utilise un émulsifiant qui est du dodécylbenzène sulfonate ou du laurylsulfate de sodium. L'émulsifiant a notamment pour rôle d'éviter la formation de billes ou d'agglomérats de PVB, néfastes à l'obtention d'un produit de bonne qualité optique. Indispensable au cours de la synthèse du PVB, l'émulsifiant doit cependant être éliminé au moins en grande partie par lavage en fin de réaction car il empêche l'adhésion au verre. Cette élimination ne peut s'effectuer correctement en milieu acide, c'est pourquoi on incorpore dans ce milieu réactionnel une base telle la soude, dans le but de neutraliser l'acide du catalyseur jusqu'à obtention d'un pH compris entre 9 et 11. Un des inconvénients de cette neutralisation est qu'au cours de cette phase il se forme des produits de réaction de condensation de l'aldéhyde butyrique sur lui-même, et notamment de l'éthyl-2-hexenal d'odeur désagréable.

Pour pallier à cet inconvénient, on a proposé dans la publication de brevet français d'utiliser en tant qu'émulsifiant du dioctylsulfosuccinate de sodium. Cet émulsifiant s'élimine facilement au lavage sans qu'il soit nécessaire de neutraliser totalement le milieu réactionnel.

Néanmoins, les feuilles de polyvinylbutyral obtenues par les procédés décrits présentent une rigidité qui peut se révéler insuffisante dans certains cas. En effet, l'automatisation des chaînes d'assemblage des vitrages feuilletés, comme les pare-brise, conduit à insérer dans les chaînes des systèmes de préhension et de découpe automatique des feuilles intercalaires. Ces systèmes fonctionnent d'autant plus facilement et sont d'autant plus fiables que la feuille est plus rigide.

La rigidité de la feuille de polyvinylbutyral qui est en correlation avec la valeur du module de Young, peut être améliorée par une augmentation du taux d'hydroxyles du PVB, mais une telle augmentation entraine une diminution des capacités de fluage en compression de la feuille.

Pour avoir les propriétés d'adhésion et de fluage désirée, on considère que le taux d'OH doit de préférence se situer entre 18 et 22 % en poids

L'invention propose un nouveau procédé pour la fabrication d'un polyvinylbutyral amélioré.

Le procédé selon l'invention utilise dans un procédé de fabrication connu d'une résine PVB, par réaction de l'aldéhyde butyrique sur l'alcool polyvinylique, un émulsifiant choisi parmi le dodécylbenzène sulfonate de sodium, le laurylsulfate de sodium, le dioctylsulfosuccinate de sodium, le dihexylsulfosuccinate de sodium, le diheptylsulfosuccinate de sodium, le dinonylsulfosuccinate de sodium, le didécylsulfosuccinate de sodium, le di-1-decylsulfosuccinate de sodium, le didodécylsulfosuccinate de sodium, le tridécylsulfosuccinate de sodium, pris en quantité supérieure à ce qui était décrit précédemment et supérieur à 0,40 % du poids de l'alcool polyvinylique lorsqu'il s'agit du dodécylbenzène sulfonate de sodium, ou du laurylsulfate de sodium et en quantité supérieure à 0,30 % du poids de l'alcool polyvinylique lorsqu'il s'agit du dioctylsulfosuccinate de sodium et des autres sulfosuccinates de sodium, afin d'obtenir un taux de butyral méso supérieur à 82 % de l'ensemble des cycles butyral pour un taux d'OH du polyvinylbutyral compris entre 18 et 22 % en poids.

2

Le procédé de fabrication préféré est celui qui regroupe les opérations décrites dans la publication FR-A-2 401 941 déjà cité mais qui utilise selon l'invention un émulsifiant en quantité plus importante que celle décrite précédemment, et de préférence le dioctylsulfosuccinate de sodium.

Par utilisation d'une quantité importante d'émulsifiant, en particulier du dioctylsulfosuccinate de sodium, on obtient une feuille de PVB, au moins deux fois plus rigide que celles obtenues dans les conditions préférées décrites dans FR-A-2 401 941.

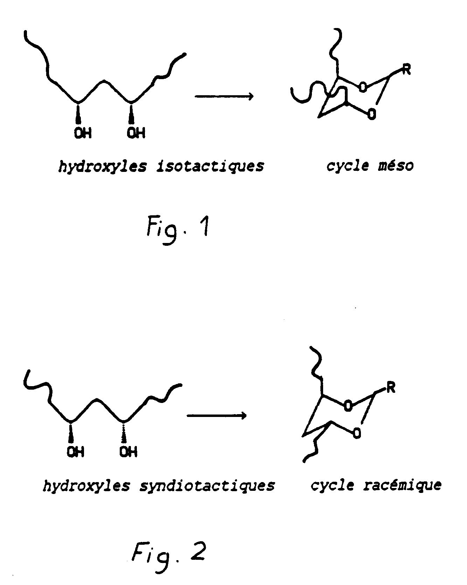

Il semble qu'une quantité importante d'émulsifiant favorise la formation du cycle acétal méso plutôt que le cycle acétal racémique, ceci pour une même quantité d'alcool polyvinylique au départ. On rappelle que le cycle méso est obtenu en acétalisant deux hydroxyles isotactiques alors que le cycle racémique est formé à partir de deux hydroxyles syndiotactiques selon les structures représentées sur les figures 1 et 2 en annexe.

Selon l'invention, on utilise donc un émulsifiant qui procure un taux de cycles butyral méso supérieur à 82 % de l'ensemble des cycles butyral pour un taux d'OH du polyvinylbutyral compris entre 18 et 22 % en poids. Avec des concentrations en émulsifiant inférieures, et comme décrit dans les documents antérieurs, on forme environ 80 % de cycles butyral méso. La mesure du taux de butyral méso est décrite par la suite.

Comme indiqué précédemment, le procédé selon l'invention permet d'obtenir une feuille de polyvinylbutyral plus rigide. Le passage d'une proportion de 80 % de cycle butyral méso à 84 % par exemple entrai ne plus du doublement du module de Young.

Selon une caractéristique du procédé selon l'invention, on limite la phase de neutralisation du mélange réactionnel à l'obtention d'un pH de l'ordre de 5 lorsqu'on utilise du dioctylsulfosuccinate de sodium. Selon une autre caractéristique de l'invention, on lave le précipité avec de l'eau à température ambiante à 20°C.

En vue de son application en tant qu'intercalare dans un vitrage feuilleté, le PVB est plastifié de façon connue à l'aide des plastifiants usuels par exemple ceux décrits dans EP-A-0 011 577 ou EP-A-0 047 215.

D'autres caractéristiques et avantages de l'invention apparaîtront dans la description suivante d'exemples de fabrication de PVB.

Les méthodes d'essais utilisées pour mettre en évidence es avantages de la présente invention sont décrites ci-après :

### Test de fluage en compression

On utilise pour ce test une presse à plateaux chauffants.

Un échantillon de feuille de PVB, ayant une épaisseur de 0,76 mm (+ 0,01 mm) est découpé à l'emporte-pièce sous forme d'un disque de 26 mm de diamètre. Le disque est placé entre deux lames de verre de 60 x 60 mm. L'ensemble est mis entre les plateaux, maintenus à 135°C, de la presse chauffante. Après 5 min de préchauffage sans appliquer de pression, le composite est soumis pendant 5 min à une pression de (10 bars) $10 \times 10^5$ Pa. Si D représente (à 0,25 mm près) le diamètre du disque de PVB pressé, le fluage est donné par la formule :

$$F = \frac{D - 26}{26} \times 100$$

On procède en général à deux mesures par échantillon de feuille.

On considère que, pour l'application du PVB à la réalisation de vitrage feuilleté, le fluage en compression doit être au moins égal à 60 %.

### Pummel test (adhésivité à des feuilles de verre)

Les échantillons de vitrage feuilleté utilisés dans ce test et les suivants sont préparés comme suit. Une feuille de PVB de 0,76 mm d'épaisseur est préalablement conditionnée en humidité, placée entre deux feuilles de verre de 30,5 x 30,5 cm et de 3 mm d'épaisseur, le verre feuilleté étant alors comprimé sous une pression de (10 bars) $10 \times 10^5$ Pa à 138°C pendant 20 minutes. Sur un de ces échantillons, on prélève, pour le Pummel test, une fraction de celui-ci de 150 à 300 mm. Celui-ci est conditionné pendant 8 heures à - 18°C. Cet échantillon est ensuite posé sur un support incliné à 45° et frappé avec un marteau à tête plate de 0,450 kg jusqu'à ce que le verre soit pulvérisé. La surface d'essais est d'environ 100 x 150 mm et les coups de marteau sont répartis sur toute la surface. La quantité de verre restant collé à la feuille de polyvinylbutyral est comparée à une échelle de standards "Pummel" notés de 0 à 10.

L'essai s'effectue sur les deux faces du verre feuilleté et le résultat s'exprime par conséquent par deux valeurs de l'échelle Pummel, déterminées de la manière suivante :

| % de surface de la feuille de PVB dont le verre s'est décollé lors de la casse | Valeurs Pummel |
|---|---|
| 100 | 0 |
| 95 | 1 |
| 90 | 2 |
| 85 | 3 |
| 60 | 4 |
| 40 | 5 |
| 20 | 6 |
| 10 | 7 |
| 5 | 8 |
| 2 | 9 |
| 0 | 10 |

On considère qu'un verre feuilleté ainsi testé est acceptable si les deux valeurs Pummel obtenues sont supérieures à 5.

Test de la chute de bille (résistance au choc)

Cet essai est effectué avec une bille d'acier d'un poids de 2,270 kg, que l'on fait tomber sur la partie centrale d'un échantillon plan du verre feuilleté, reposant en position horizontale sur un cadre en bois. L'échantillon de verre feuilleté mesure 30,5 x 30,5 cm et les feuilles de verre ont 3 mm d'épaisseur.

Les échantillons sont à une température de 21°C (+ 2°C) et l'essai est conduit à des hauteurs croissantes de chute de la bille. On détermine la hauteur approximative, exprimée en mètres, pour laquelle plus de 90 % des échantillons testés résistent au passage de la bille à travers le feuilleté.

Ce test est considéré comme positif lorsque cette hauteur approximative est supérieure ou égale à environ 5, 18 mètres (17 pieds).

Test de détermination de la turbidité

Le "trouble" (ou "turbidité") d'une feuille transparente est défini comme étant le pourcentage du flux lumineux la traversant qui est dévié d'un angle supérieur à 2,5 degrés.

La mesure de la turbidité s'effectue conformément à la norme NF 54-111 (qui concorde largement avec la méthode A de la norme ASTM D 1003-61).

Pour les applications du PVB à la réalisation de vitrages feuilletés, on considère comme acceptables des valeurs de la turbidité inférieures ou égales à 0,3 %.

Test de résistance à l'humidité

Des échantillons de vitrage feuilleté sont préparés en interposant un intercalaire plastifié de 0,76 mm entre deux plaques de verre de 30,5 x 30,5 cm et de 3 mm d'épaisseur. Ces échantillons sont placés dans de l'eau bouillante pendant deux heures et examinés ensuite pour déceler une éventuelle formation de bulles ou d'une bande blanche translucide à la périphérie des échantillons. L'absence de formation de bulles ou de bandes blanches translucides indique que le feuilleté a subi avec succès le test de résistance à l'humidité.

Test de détermination de la rigidité

On mesure le module de Young qui correspond à la pente à l'origine de la courbe qui représente la contrainte en fonction de la déformation. Cette mesure est effectuée d'après la norme ISO R 527, à 22°C et sous une humidité relative de 50 %.

Mesure du taux de butyral méso

C'est la mesure relative de la surface des pics correspondant au butyral méso à 103,4 ppm et de celle des pics correspondant au butyral racémique à 95,8 ppm, en résonance magnétique nucléaire RMN en phase solide du carbone 13.

EXEMPLE TEMOIN 1

Cet exemple utilise le procédé décrit dans la publication de brevet français 2 401 941.

Dans une solution de 30 kg d'alcool polyvinylique dans 300 l d'eau à une température de 10°C, on mélange 67,5 g de dodécylbenzène sulfonate de sodium, ce qui correspond à 0,22 % du poids de l'alcool polyvinylique, et 2,65 kg d'acide chlorhydrique de densité 1,18. Le mélange étant maintenu à une température de 10°C, on y introduit progressivement et régulièrement, en 30 minutes, 17,1 kg d'aldéhydebutyrique. On constate une élévation de température de quelques degrés. La solution devient blanchâtre et sa viscosité augmente. Brusquement, 30 minutes environ après le début de l'introduction de l'aldéhyde butyrique, on constate l'apparition d'un précipité et une diminution de la viscosité. Le mélange est alors laissé pendant 30 minutes à une température de 13°C. On amène ensuite progressivement la température à 70°C, la durée de montée en température étant de 90 minutes. Le mélange est alors neutralisé par 1,35 kg de soude ce qui correspond à l'obtention d'un pH de 10. On le maintient à 70°C durant 60 minutes. Il est ensuite refroidi et lavé plusieurs fois avec de l'eau à 70°C, essoré et séché.

La résine est ensuite plastifiée avec par exemple de l'adipate de benzyle et d'octyle selon les méthodes bien connues de l'homme de métier, à raison de 30 % du plastifiant pour 100 % de résine plastifiée.

Les vitrages feuilletés utilisant une feuille de cette résine plastifiée présente de bonnes propriétés optiques et mécaniques ainsi qu'une bonne résistance à l'humidité.

Les essais effectués sur des feuilletés dans les conditions décrites précédemment donnent les résultats suivants :

| Taux d'hydroxyle | 19,2 % |
|---|---|
| Teneur en butyral méso | 80,5 % |
| Fluage | 56 % |
| Chute de billes | 5,8 mètres |
| Pummel | 5 + 5 |
| Turbidité | 0,29 |
| Module de Young | $0,8 . 10^6$ N/m$^2$ |

EXEMPLE TEMOIN 2

On remplace le dodécylbenzène sulfonate de sodium de l'exemple témoin 1 par du dioctylsulfosuccinate de sodium à raison de 0,15 % en poids par rapport au poids de l'alcool polyvinylique. Les résultats sont les suivants :

| Taux d'hydroxyle | 19,2 % |
|---|---|
| Teneur en butyral méso | 80,9 % |
| Fluage | 56 % |
| Chute de billes | 5,7 mètres |
| Pummel | 5 + 5 |
| Turbidité | 0,28 |
| Module de Young | $0,82.10^6$ N/m$^2$ |

EXEMPLES 1 ET 2

On opère de la même façon que dans l'exemple témoin 1 sauf qu'on augmente la quantité de dodécylbenzène sulfonate de sodium, en prenant 0,44 % et 0,50 % respectivement par rapport au poids de l'alcool polyvinylique. Les résultats sont les suivants :

| Taux d'hydroxyle | 19,2 % | 19,2 % |
|---|---|---|
| Teneur en butyral méso | 84,3 % | 84,5 % |
| Fluage | 56 % | 56 % |
| Chute de billes | 5,7 mètres | 5,6 mètres |
| Pummel | 5 + 5 | 5 + 5 |
| Turbidité | 0,29 | 0,29 |
| Module de Young | $1,3 \ 10^6$ N/m$^2$ | $1,6.10^6$ N/m$^2$ |

La quantité plus grande en émulsifiant augmente la teneur en butyral méso et accroit fortement la rigidité de la feuille.

EXEMPLES 3 ET 4

On opère de la même façon que dans les exemples 1 ou 2, sauf qu'on remplace le dodécylbenzène sulfonate de sodium par du dioctylsulfosuccinate de sodium, à raison de 0,32 % et 0,40 % en poids respectivement par rapport au poids de l'alcool polyvinylique. Les résultats sont les suivants :

| Taux d'hydroxyle | 19,2 % | 19,2 % |
|---|---|---|
| Teneur en butyral méso | 84,4 % | 85,0 % |
| Fluage | 56 % | 56 % |
| Chute de billes | 5,7 mètres | 5,7 mètres |
| Pummel | 5 + 5 | 5 + 5 |
| Turbidité | 0,28 | 0,29 |
| Module de Young | $1,7 \ 10^6$ N/m$^2$ | $1,8.10^6$ N/m$^2$ |

Lorsqu'on utilise du DOS en concentration supérieure à 0,30 % en poids par rapport au poids de l'alcool polyvinylique, on observe une nette amélioration de la rigidité de la feuille de PVB.

**Revendications**

1. Procédé de fabrication de polyvinylbutyral par réaction d'alcool polyvinylique en solution aqueuse et d'aldéhyde butyrique, en présence d'un catalyseur acide et d'un émulsifiant choisi parmi le dodécylbenzène sulfonate de sodium, le laurylsulfate de sodium, les sulfosuccinates de sodium, dihexyl-, diheptyl-, dioctyl-, dinonyl-, di-1-dêcyl-, didodécyl-, tridécyl-, caractérisé en ce qu'on utilise une quantité d'émulsifiant supérieure à 0,4 % en poids de l'alcool polyvinylique pour le dodécylbenzène sulfonate de sodium et le laurylsulfate de sodium et supérieure à 0,3 % en poids de l'alcool polyvinylique pour les sulfosuccinates de sodium, en vue d'obtenir un taux de butyral méso supérieur à 82 % de l'ensemble des cycles butyral pour un taux d'OH du polyvinlbutyral compris entre 18 et 22 % en poids.

2. Procédé selon la revendicaton 1, caractérisé en ce que la solution aqueuse comprend entre 8 et 15 % en poids d'alcool polyvinylique en ce qu'on y incorpore un catalyseur acide et l'émulsifiant en quantité supérieure à 0,4 % ou 0,3 % en poids selon le cas, en ce que l'on introduit dans le mélange ainsi obtenu, maintenu entre 5 et 12°C et sous agitation, de l'aldéhyde butyrique en quantité suffisante pour réagir avec 75 à 88 % de l'alcool polyvinylique du mélange, en ce que l'introduction de l'aldéhyde butyrique s'effectue progressivement pendant une durée telle que le polyvinylbutyral précipite entre 10 et 90 minutes après le début de cette introduction, en ce que le mélange résultant est maintenu sous agitation pendant une durée supérieure à 30 minutes à une température de 8 à 15°C, en ce que la température du mélange est ensuite élevée jusqu'à une valeur maintenue entre 60 et 80°C en un laps de temps compris entre une heure et demie et 4 heures, en ce que, lorsque ladite valeur de température est atteinte, on neutralise le mélange réactionnel à l'aide d'une base, en ce que la température est maintenue ensuite à ladite valeur pendant une durée égale ou supérieure à environ 5 minutes et en ce que le polyvinylbutyral précipité est ensuite séparé du mélange et lavé avec de l'eau.

6

3. Procédé selon la revendication 2, caractérisé en ce qu'on utilise du dioctyisulfosuccinate de sodium.

4. Procédé selon une des revendications 2 ou 3, caractérisé en ce qu'on limite la phase de neutralisation du mélange réactionnel à l'obtention d'un pH de l'ordre de 5, lorsqu'on utilise du dioctylsulfosuccinate de sodium.

5. Procédé sel on une des revendications 1 à 4, caractérisé en ce qu'on lave le précipité avec de l'eau à température ambiante à 20°C.

6. Procédé selon une des revendications 1 à 5, caractérisé en ce que le catalyseur acide est de l'acide chlorhydrique.

7. Polyvinylbutyral obtenu par la mise en oeuvre du procédé selon une des revendications 1 à 6, caractérisé en ce qu'il présente une teneur en cycle butyral méso supérieur à 82 %.

8. Feuille intercalaire en polyvinylbutyral plastifié caractérisée en ce que le polyvinylbutyral plastifié est obtenu selon une des revendications 1 à 6.

9. Vitrage feuilleté comprenant au moins une feuille intercalaire selon la revendication 8.

**Claims**

1. Method for the manufacture of polyvinyl butyral by the reaction of polyvinyl alcohol in an aqueous solution and butyric aldehyde, in the presence of an acid catalyst and an emulsifier chosen from sodium dodecylbenzene sulphonate, sodium laurylsulphate, sodium dihexyl-, diheptyl-, dioctyl-, dinonyl-, di-1-decyl-, didodecyl-, tridecyl-, sulphosuccinates, characterised in that one uses a quantity of emulsifier greater than 0.4 by weight of the polyvinyl alcohol for the sodium dodecylbenzene sulphonate and the sodium laurylsulphate and greater than 0.3% by weight of the polyvinyl alcohol for the sodium sulphosuccinates, with a view to obtaining a proportion of meso butyral greater than 82% of all of the butyral rings for an OH content of the polyvinyl butyral comprised between 18 and 22% by weight.

2. Method according to claim 1, characterised in that the aqueous solution comprises between 8 and 15% by weight polyvinyl alcohol, in that one incorporates therein an acid catalyst and the emulsifier in a quantity greater than 0.4% and 0.3%, by weight depending on the case, in that one introduces into the mixture obtained in this way, kept at between 5 and 12°C and with stirring, butyric aldehyde in a sufficient quantity to react with 75 to 88% of the polyvinyl alcohol of the mixture, in that the introduction of the butyric aldehyde takes place progressively for a period of time such that the polyvinyl butyral precipitates between 10 and 90 minutes after the beginning of this introduction, in that the resulting mixture is kept with stirring for a period of time greater than 30 minutes at a temperature of 8 to 15°C, in that the temperature of the mixture is then raised to a value kept between 60 and 80°C for a period of time comprised between one and a half hours and four hours, in that, when said temperature value is reached, the reaction mixture is neutralized by means of a base, in that the temperature is then kept at said value for a time equal to or greater than approximately 5 minutes and in that the precipitated polyvinyl butyral is then separated from the mixture and washed with water.

3. Method according to claim 2, characterized in that sodium dioctylsulphosuccinate is used.

4. Method according to one of claims 2 or 3, characterized in that the neutralisation phase of the reaction mixture is limited to obtaining a pH of the order of 5, when using sodium dioctylsulphosuccinate.

5. Method according to one of claims 1 to 4, characterized in that the precipitate is washed with water at an ambient temperature of 20°C.

6. Method according to one of claims 1 to 5, characterized in that the acid catalyst is hydrochloric acid.

7. Polyvinyl butyral obtained by carrying out the method according to one of claims 1 to 6, characterized in that it has a meso butyral ring content greater than 82%.

EP 0 402 213 B1

8. Insert sheet of plazticized polyvinyl butyral, characterized in that the plasticized polyvinyl butyral is obtained according to one of claims 1 to 6.

9. Laminated glazing comprising at least one insert sheet according to claim 8.

**Patentansprüche**

1. Verfahren zur Herstellung von Polyvinylbutyral durch Umsetzung von Polyvinylalkohol in wäßriger Lösung und Butyraldehyd in Gegenwart eines sauren Katalysators und eines Emulgators, ausgewählt aus Natriumdodecylbenzolsulfonat, Natriumlaurylsulfat und Natriumdihexyl-, Natriumdiheptyl-, Natriumdioctyl-, Natriumdinonyl-, Natrium-di-1-decyl-, Natriumdidodecyl-, Natriumtridecylsulfosuccinat, dadurch gekennzeichnet, daß eine Emulgatormenge von mehr als 0,4 Gew.-% des Polyvinylalkohols für Natriumdodecylbenzolsulfonat und Natriumlaurylsulfat und von mehr als 0,3 Gew.-% des Polyvinylalkohols für die oben angegebenen Natriumsulfosuccinate verwendet wird, um eine Ausbeute an Mesobutyral von mehr als 82 % der Gesamtmenge an cyclischem Butyral bei einer Ausbeute an OH-Polyvinylbutyral zwischen 18 uns 22 Gew.-% zu erhalten.

2. Verfahren nach Anspruch 1, dadurch gekennzeichnet, daß die wäßrige Lösung zwischen 8 und 15 Gew.-% Polyvinylalkohol umfaßt und dadurch, daß ein saurer Katalysator und der Emulgator je nach Fall in einer Menge von mehr als 0,4 Gew.-% oder 0,3 Gew.-% eingearbeitet werden, dadurch daß in das so erhaltene Gemisch, das unter Rühren zwischen 5 und 12 °C gehalten wird, der Butyraldehyd in einer Menge eingearbeitet wird, die ausreicht, um mit 75 bis 88 % des Polyvinylalkohols des Gemisches zu reagieren, dadurch daß die Einarbeitung des Butyraldehyds während einer Zeitdauer stufenweise abläuft, so daß das Polyvinylbutyral zwischen 10 und 90 Minuten nach Beginn dieser Einarbeitung ausfällt, dadurch daß das resultierende Gemisch während einer Zeitdauer von mehr als 30 Minuten unter Rühren bei einer Temperatur von 8 bis 15 °C gehalten wird, dadurch daß die Temperatur des Gemisches anschließend bis zu einem Wert gesteigert wird, der eine Zeitlang, die zwischen 1,5 Stunden und 4 Stunden liegt, zwischen 60 und 80 °C gehalten wird, dadurch daß, wenn der genannte Temperaturwert erreicht ist, das Reaktionsgemisch mit Hilfe einer Base neutralisiert wird, dadurch daß die Temperatur anschließend während einer Zeitdauer von größer oder etwa gleich 5 Minuten gehalten wird, und dadurch daß das ausgefällte Polyvinylbutyral anschließend von dem Gemisch abgetrennt und mit Wasser gewaschen wird.

3. Verfahren nach Anspruch 2, dadurch gekennzeichnet, daß Natriumdioctylsulfosuccinat verwendet wird.

4. Verfahren nach einem der Ansprüche 2 oder 3, dadurch gekennzeichnet, daß die Neutralisationsphase des Reaktionsgemisches beendet wird, nachdem ein pH-Wert in der Größenordnung von 5 erreicht worden ist, wenn Natriumdioctylsulfosuccinat verwendet wird.

5. Verfahren nach einem der Ansprüche 1 bis 4, dadurch gekennzeichnet, daß der Niederschlag mit Wasser von Umgebungstemperatur bis 20 °C gewaschen wird.

6. Verfahren nach einem der Ansprüche 1 bis 5, dadurch gekennzeichnet, daß der saure Katalysator Chlorwasserstoffsäure ist.

7. Polyvinylbutyral, das dadurch erhalten wird, daß das Verfahren nach einem der Ansprüche 1 bis 6 durchgeführt wird, dadurch gekennzeichnet, daß der Gehalt an cyclischem Mesobutyral über 82 % liegt.

8. Trennfolie aus plastifiziertem Polyvinylbutyral, dadurch gekennzeichnet, daß das plastifizierte Polyvinylbutyral nach einem der Ansprüche 1 bis 6 erhalten wird.

9. Aus dünnen Folien bestehendes Fensterglas, umfassend wenigstens eine eingeschobene Folie nach Anspruch 8.

hydroxyles isotactiques          cycle méso

Fig. 1

hydroxyles syndiotactiques          cycle racémique

Fig. 2